(19) Europäisches Patentamt / European Patent Office / Office européen des brevets

(11) **EP 3 418 689 A1**

(12) **EUROPÄISCHE PATENTANMELDUNG**

(43) Veröffentlichungstag:
26.12.2018 Patentblatt 2018/52

(51) Int Cl.:
*G01C 21/16* (2006.01)   *G01C 25/00* (2006.01)

(21) Anmeldenummer: 18178330.9

(22) Anmeldetag: 18.06.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.06.2017   DE 102017113337**

(71) Anmelder: **Raytheon Anschütz GmbH 24106 Kiel (DE)**

(72) Erfinder:
• **Beyer, Marc-André**
  **24159 Kiel (DE)**
• **von Cysewski, Andreas**
  **24107 Kiel (DE)**
• **Mangold, Ulrich**
  **24116 Kiel (DE)**
• **Schwab, Hendrik**
  **24119 Kronshagen (DE)**

(74) Vertreter: **Lobemeier, Martin Landolf et al c/o Ibmr. Patent- und Markenrecht Holtenauer Strasse 57 24105 Kiel (DE)**

(54) **WARTUNGSFREIER STRAP-DOWN-SCHIFFSKREISELKOMPASS**

(57) Verfahren zum Betreiben eines Strap-Down-Schiffskreiselkompasses zur optimalen Lage- und Kurswinkelberechnung auf einem Schiff mit drei zueinander jeweils im rechten Winkel ausgerichteten Drehratensensoren und zwei nominal horizontal ausgerichteten orthogonalen Beschleunigungssensoren ohne zwingende Vorgabe der geografischen Breite und/oder der Geschwindigkeit des Schiffs, gekennzeichnet durch die Schritte a. Erstellen einer Bank von Dynamikgleichungen aufgrund der von den Drehratensensoren erfassten Daten, b. Erstellen einer Messdatengleichung aufgrund der von den Beschleunigungssensoren erfassten Kraftkomponenten, c. Ermitteln der Eigenschaften des Hebelarms zwischen dem Strap-Down-Schiffskreiselkompass und dem Drehpunkt des Schiffs und d. Ermitteln der Eigenschaften der Erdrotation sowie der Schiffswinkelgeschwindigkeit, wobei deren Eigenschaften auf der Grundlage der Bank von Dynamikgleichungen und der Messdatengleichung ermittelt und jeweils als Parameter zur Berechnung der geografischen Breite und/oder Geschwindigkeit des Schiffs verwendet werden.

FIG. 1

**Beschreibung**

Die Erfindung betrifft einen wartungsfreien Strap-Down-Schiffskreiselkompass. Insbesondere betrifft die Erfindung ein Verfahren zum Betreiben eines Strap-Down-Schiffskreiselkompasses auf einem Schiff mit drei zueinander jeweils im rechten Winkel ausgerichteten Drehratensensoren und zwei nominal horizontal ausgerichteten orthogonalen Beschleunigungssensoren.

Herkömmliche Strap-Down-Schiffskreiselkompasse erfordern zu deren Inbetriebnahme zwingend die Eingabe der bekannten Schiffsposition und der Schiffsgeschwindigkeit.

Nachteilig an diesem Vorgehen ist, dass derartige Kompasse nach einem Systemausfall nicht unmittelbar zur Verfügung stehen.

Aufgabe der Erfindung ist es daher, ein Verfahren zum Betrieb eines Strap-Down-Schiffskreiselkompass, insbesondere ein Verfahren zur Lage- und Kursberechnung mittels eines Strap-Down-Schiffskreiselkompasses zu schaffen, das ständig verfügbar, sehr genau und äußerst zuverlässig ist.

Diese Aufgabe wird erfindungsgemäß durch das Verfahren mit den Merkmalen von Anspruch 1 gelöst. Die Unteransprüche geben vorteilhafte Ausgestaltungen der Erfindung wieder.

Zunächst geht die vorliegende Erfindung von einem Strap-Down-System mit auf dem Schiff hartmontierten Sensoren aus, also drei zueinander jeweils im rechten Winkel angeordneten Drehratensensoren sowie zwei nominal horizontal ausgerichteten orthogonalen Beschleunigungssensoren. Der übliche dritte, nominal vertikale Beschleunigungssensor wird für eine Kompassapplikation, bei der keine Positionsintegration erfolgen muss, nicht benötigt. Die Modellierung der Erdschwere in Abhängigkeit von der geographischen Breite ist ebenfalls nicht nötig, ein mittlerer konstanter Wert ist genauigkeitsmäßig ausreichend.

Alle heute am Markt verfügbaren Kompasssysteme benötigen beim Systemstart zwingend die Eingabe der geographischen Breite sowie der Schiffsgeschwindigkeit. Andernfalls können diese Systeme die Nordrichtung im Intervall [0°, 360°] nicht finden und halten. Während die Schiffsgeschwindigkeit betriebssicher und ausreichend genau vom bordautonomen Log erfasst werden kann, wird die geographische Breite in den allermeisten Fällen von einem GPS-Einfrequenzempfänger erhalten. Solche Empfänger stützen sich auf schwache Signale aus dem Weltraum und sind extrem anfällig für absichtliche wie auch unbeabsichtigte Stör- (engl. jamming) und vor allem Täuschsignale (engl. spoofing). Die vorliegende Erfindung lässt die Quellen für die Geschwindigkeit und geographische Breite offen. Letztere kann auch mit ausreichender Genauigkeit und Kadenz astronomisch ermittelt werden.

Die vorliegende Erfindung hat daher zwei hauptsächliche Ziele bei allen realistischen Schiffsbewegungs- und Seegangsbedingungen:

1. Finden und (Beibe-) Halten der Nordrichtung nur mit den Informationen der drei Drehraten- und zwei Beschleunigungssensoren, d. h. ohne jegliche externe Information.

2. Stehen externe Positions- aber auch Geschwindigkeitsinformation zur Verfügung, wird nicht nur die Nordrichtung gefunden und beibehalten, sondern auch die Drehratensensoren während der Mission kalibriert, um die Kursgenauigkeit zu steigern und Alterungseffekte der Drehratensensoren auszugleichen.

Erfindungsgemäß ist also ein Verfahren zum Betreiben eines Strap-Down-Schiffskreiselkompasses zur optimalen Lage- und Kurswinkelberechnung auf einem Schiff mit drei zueinander jeweils im rechten Winkel ausgerichteten orthogonalen Drehratensensoren und zwei nominal horizontal ausgerichteten Beschleunigungssensoren ohne zwingende Vorgabe der geografischen Breite und/oder der Geschwindigkeit des Schiffs vorgesehen, mit den Schritten: a. Erstellen einer Bank von Dynamikgleichungen aufgrund der von den Drehratensensoren erfassten Daten, b. Erstellen einer Messdatengleichung aufgrund der von den Beschleunigungssensoren erfassten Daten, c. Ermitteln der Eigenschaften des Hebelarms zwischen Strap-Down-Schiffskreiselkompass und Drehpunkt des Schiffs und d. Ermitteln der Eigenschaften der Erdrotation sowie der Schiffswinkelgeschwindigkeit, wobei deren Eigenschaften auf der Grundlage der Bank von Dynamikgleichungen und der Messdatengleichung ermittelt und jeweils als Parameter zur Berechnung der geografischen Breite und/oder Geschwindigkeit des Schiffs verwendet werden.

Bevorzugt lautet die Dynamikgleichung in allgemeiner Form:

$$\underline{\underline{\overset{\&}{C}}}_{nb} = \underline{\underline{C}}_{nb} \cdot \underline{\underline{\Omega}}^b_{nb} = \underline{\underline{C}}_{nb} \cdot \left( \underline{\underline{\Omega}}^b_{ib} + \delta \underline{\underline{\Omega}}^b_{ib} \right) - \left( \underline{\underline{\Omega}}^n_{en} + \underline{\underline{\Omega}}^n_{ie} \right) \cdot \underline{\underline{C}}_{nb}$$

die Messdatengleichung hingegen lautet bevorzugt:

$$\underline{f}^b + \delta \underline{f}^b = \underline{\overset{\&}{v}}^b - \underline{\underline{C}}^T_{nb} \cdot \underline{g}^n$$

mit:

$$
\underline{\underline{C}}_{nb}(\phi,\theta,\psi) = \underline{R}_3(-\psi) \cdot \underline{R}_2(-\theta) \cdot \underline{R}_1(-\phi)
$$

$$
= \begin{pmatrix}
\mathrm{c}\theta \cdot \mathrm{c}\psi & \mathrm{s}\phi \cdot \mathrm{s}\theta \cdot \mathrm{c}\psi - \mathrm{c}\phi \cdot \mathrm{s}\psi & \mathrm{c}\phi \cdot \mathrm{s}\theta \cdot \mathrm{c}\psi + \mathrm{s}\phi \cdot \mathrm{s}\psi \\
\mathrm{c}\theta \cdot \mathrm{s}\psi & \mathrm{s}\phi \cdot \mathrm{s}\theta \cdot \mathrm{s}\psi + \mathrm{c}\phi \cdot \mathrm{c}\psi & \mathrm{c}\phi \cdot \mathrm{s}\theta \cdot \mathrm{s}\psi - \mathrm{s}\phi \cdot \mathrm{c}\psi \\
-\mathrm{s}\theta & \mathrm{s}\phi \cdot \mathrm{c}\theta & \mathrm{c}\phi \cdot \mathrm{c}\theta
\end{pmatrix}
$$

wobei:

- $\underline{\underline{C}}_{nb}$ der Transformationsmatrix mit dem Roll-, Nick- und Kurswinkel des Kompass,
- $\underline{\underline{\Omega}}_{ib}^{b}$ den von den drei Drehratensensoren gemessenen Winkelgeschwindigkeitskomponenten,
- $\underline{\underline{\Omega}}_{ie}^{n}$ den Erddrehratenkomponenten im Nord-Ost-Unten-Bezugssystem als Funktionen der geografischen Breite,
- $\underline{\underline{\Omega}}_{en}^{n}$ den Schiffswinkelgeschwindigkeitskomponenten im Nord-Ost-Unten-Bezugssystem als Funktionen des Kompassgeschwindigkeitsvektors auf der gekrümmten Erdoberfläche,
- $\delta\underline{\underline{\Omega}}_{ib}^{b}$, $\delta \underline{f}^{b}$ den Fehlerkorrekturen der Drehratensensoren und Beschleunigungssensoren,
- $\underline{f}^{b}$ den von den nominal horizontal und orthogonal angeordneten Beschleunigungssensoren gemessenen Kraftkomponenten und
- $\underline{g}^{n}$ der Erdschwere mit $\underline{g}^{n} = (0\ 0\ g)^{T}$

entspricht.

Nach einer weiteren bevorzugten Ausgestaltung werden die Fehlerkorrekturen der Drehratensensoren und Beschleunigungssensoren mittels eines Optimalfilters auf der Grundlage einer Teilmenge der erstellten Bank von Dynamikgleichungen ermittelt.

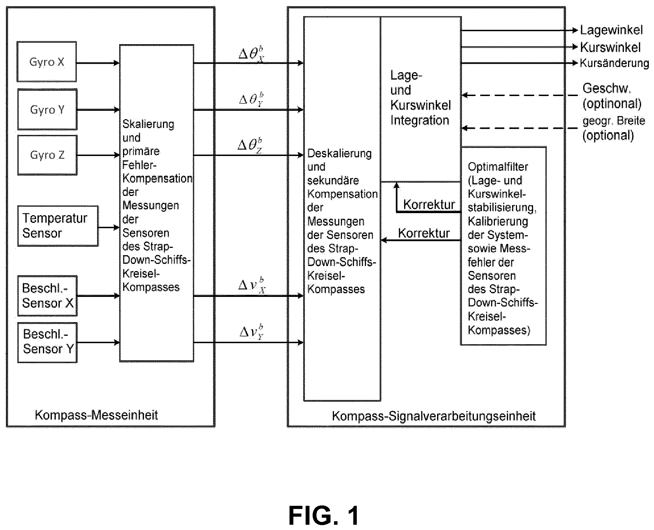

Fig. 1 zeigt eine schematische Übersicht über die Komponenten eines erfindungsgemäß ausgestalteten Strap-Down-Schiffskreiselkompasses mit einer Kompass-Messeinheit, einer Kompass-Signalverarbeitungseinheit und der von beiden Einheiten gewonnenen bzw. verarbeiteten Parametern.

Im Folgenden wird die Erfindung anhand besonders bevorzugt ausgestalteter Ausführungsbeispiele näher erläutert:

Schätzung des Hebelarms

Die nichtlineare Systemdynamik wird durch die folgende Dynamikgleichung abgebildet:

$$
\underline{\underline{\overset{\&}{C}}}_{nb} = \underline{\underline{C}}_{nb} \cdot \underline{\underline{\Omega}}_{nb}^{b} = \underline{\underline{C}}_{nb} \cdot \left(\underline{\underline{\Omega}}_{ib}^{b} + \delta\underline{\underline{\Omega}}_{ib}^{b}\right) - \left(\underline{\underline{\Omega}}_{en}^{n} + \underline{\underline{\Omega}}_{ie}^{n}\right) \cdot \underline{\underline{C}}_{nb}
$$

die nichtlineare Messdatengleichung lautet:

$$
\underline{f}^{b} + \delta \underline{f}^{b} = \underline{\overset{\&}{x}}^{b} - \underline{\underline{C}}_{nb}^{T} \cdot \underline{g}^{n}
$$

mit:

$$
\underline{\underline{C}}_{nb}(\phi,\theta,\psi) = \underline{R}_3(-\psi) \cdot \underline{R}_2(-\theta) \cdot \underline{R}_1(-\phi)
$$

$$
= \begin{pmatrix}
\mathrm{c}\theta \cdot \mathrm{c}\psi & \mathrm{s}\phi \cdot \mathrm{s}\theta \cdot \mathrm{c}\psi - \mathrm{c}\phi \cdot \mathrm{s}\psi & \mathrm{c}\phi \cdot \mathrm{s}\theta \cdot \mathrm{c}\psi + \mathrm{s}\phi \cdot \mathrm{s}\psi \\
\mathrm{c}\theta \cdot \mathrm{s}\psi & \mathrm{s}\phi \cdot \mathrm{s}\theta \cdot \mathrm{s}\psi + \mathrm{c}\phi \cdot \mathrm{c}\psi & \mathrm{c}\phi \cdot \mathrm{s}\theta \cdot \mathrm{s}\psi - \mathrm{s}\phi \cdot \mathrm{c}\psi \\
-\mathrm{s}\theta & \mathrm{s}\phi \cdot \mathrm{c}\theta & \mathrm{c}\phi \cdot \mathrm{c}\theta
\end{pmatrix}
$$

wobei:

- $\underline{C}_{nb}$ der Transformationsmatrix mit dem Roll-, Nick- und Kurswinkel des Kompass,

- $\underline{\underline{\Omega}}^{b}_{ib}$ den von den drei Drehratensensoren gemessenen Winkelgeschwindigkeitskomponenten,

- $\underline{\underline{\Omega}}^{n}_{ie}$ den Erddrehratenkomponenten im Nord-Ost-Unten-Bezugssystem als Funktionen der geografischen Breite,

- $\underline{\underline{\Omega}}^{n}_{en}$ den Schiffswinkelgeschwindigkeitskomponenten im Nord-Ost-Unten-Bezugssystem als Funktionen des Kompassgeschwindigkeitsvektors auf der gekrümmten Erdoberfläche,

- $\delta\underline{\underline{\Omega}}^{b}_{ib}$, $\delta\underline{f}^{b}$ den Fehlerkorrekturen der Drehratensensoren und Beschleunigungssensoren,

- $\underline{f}^{b}$ den von den nominal horizontal und orthogonal angeordneten Beschleunigungssensoren gemessenen Kraftkomponenten und

- $\underline{g}^{n}$ der Erdanziehung mit $\underline{g}^{n} = (0\ 0\ g)^{T}$

entspricht.

Es ist zu beachten, dass $\underline{\underline{\Omega}}^{b}_{ib}$, $\underline{\underline{\Omega}}^{n}_{ie}$, $\underline{\underline{\Omega}}^{n}_{en}$ und $\delta\underline{\underline{\Omega}}^{b}_{ib}$ schiefsymmetrische Matrizen sind, die jeweils aus den Vektoren $\underline{\omega}^{b}_{ib}$, $\underline{\omega}^{n}_{ie}$, $\underline{\omega}^{n}_{en}$ und $\delta\underline{\omega}^{b}_{ib}$ gebildet sind.

Weiter gilt $\underline{\omega}^{n}_{ie} \equiv \begin{pmatrix} \omega_{N} & \omega_{E} & \omega_{D} \end{pmatrix}^{T} = \Omega \cdot \begin{pmatrix} \cos\varphi & 0 & -\sin\varphi \end{pmatrix}^{T}$, wobei $\Omega$ die Winkelgeschwindigkeit

$$\underline{\omega}^{n}_{en} \equiv \begin{pmatrix} \rho_{N} & \rho_{E} & \rho_{D} \end{pmatrix}^{T} = \frac{1}{R} \cdot \begin{pmatrix} v_{E} & -v_{N} & -v_{E} \cdot \tan\varphi \end{pmatrix}^{T}$$

der Erde, $\varphi$ die geografische Breite und ist, wobei R, $v_{N}$ und $v_{E}$ der Erdradius, und die nördlichen und östlichen Geschwindigkeitskomponenten sind.

Um nun die Verfügbarkeit, Genauigkeit sowie Betriebszuverlässigkeit des Strap-Down-Schiffskreiselkompasses, insbesondere bei hohem Seegang zu erhöhen, wird eine zusätzlich Schätzung der Hebelarmkomponenten vorgenommen, wobei die spezifischen Kraftmessungen $f^{b}_{X}$ und $f^{b}_{Y}$ korrigiert werden durch:

- mittels Optimalfilter geschätzte Beschleunigungssensorabweichungen $b^{b}_{X}$ und $b^{b}_{Y}$

- mittels Optimalfilter geschätzte Hebelarmkomponenten $l^{v}_{X}$, $l^{v}_{Y}$ und $l^{v}_{Z}$, also deren resultierende Zentrifugal- und Drehbeschleunigungen

- mittels Geschwindigkeitsfilter geschätzte Schiffslängsbeschleunigungseffekte $\hat{a}^{v}_{X}$, und

- mittels Geschwindigkeitsfilter geschätzte Schiffslängsgeschwindigkeit $\hat{v}^{v}_{X}$, bzw. daraus entstehende Coriolisbeschleunigungseffekte.

Die Differenz zwischen den korrigierten spezifischen Kraftmessungen und dem skalierten Schwerkraftvektor, d.h. $((C_{n/\tilde{n}b})_{3,1}\ (C_{n/\tilde{n}b})_{3,2})^{T}$, wird Residualvektor genannt und ist als Funktion der mittels Optimalfilter geschätzten Korrekturen der Beschleunigungssensorabweichungen und der Hebelarmkomponenten ausgebildet, sowie der Roll- und Nickwinkelfehlerkorrekturen $\delta\phi$ und $\delta\theta$, die als Neigungsfehlerwinkelkorrekturen $\varepsilon_{N/\tilde{N}}$ und $\varepsilon_{E/\tilde{E}}$ ausgedrückt werden in Übereinstimmung mit den Definitionen $\underline{\underline{E}}^{n} \equiv \delta\underline{\underline{C}}_{nb} \cdot \underline{\underline{C}}^{T}_{\hat{n}b}$ und

$$\underline{\underline{E}}^{n} \equiv \begin{pmatrix} 0 & -\varepsilon_{D} & \varepsilon_{E/\tilde{E}} \\ \varepsilon_{D} & 0 & -\varepsilon_{N/\tilde{N}} \\ -\varepsilon_{E/\tilde{E}} & \varepsilon_{N/\tilde{N}} & 0 \end{pmatrix}$$

N, E und D bezeichnen die nördliche, östliche und vertikal nach unten gerichtete Richtung, wobei $\tilde{N}$ und $\tilde{E}$ die unbekannte

initiale Orientierung des Strap-Down-Schiffskreiselkompasses während der groben Ausrichtungsphase bezeichnen.

$(C_{vb})_{i,j}$ bezeichnet das Element in der Zeile i und der Spalte j der Transformationsmatrix vom Kompasskoordinatensystem b ins Schiffskoordinatensystem v mit den Achsen des v-Koordinatensystems zeigend auf:

- den Bug entlang der Längsachse des Schiffs
- Steuerbord entlang der Querachse des Schiffs und
- den Schiffsrumpf entlang der Normalachse des Schiffs.

Die Konstanzmatrix $\underline{C}_{vb}$ wird während der Kompassinstallation auf dem Schiff bestimmt durch Referenzierung auf den Azimut des Piers. Zu beachten ist, dass $\underline{C}_{nv} = \underline{C}_{nb} \cdot \underline{C}_{vb}^T$ gilt, mit der Identität $\underline{C}_{nv}(\phi_v, \theta_v, \psi_v) = \underline{R}_3(-\psi_v) \cdot \underline{R}_2(-\theta_v) \cdot \underline{R}_1(-\phi_v)$, die die Schiffsroll-, Nick- und Kurswinkel enthält. $(\hat{\omega}_{ib}^b)_X$, $(\hat{\omega}_{ib}^b)_Y$, $(\hat{\omega}_{ib}^b)_Z$ und $\hat{f}_X^b$, $\hat{f}_Y^b$ werden aus den üblicherweise gemessenen Winkel- und Geschwindigkeitszuwächsen $\Delta\theta_X^b$, $\Delta\theta_Y^b$, $\Delta\theta_Z^b$ und $\Delta v_X^b$, $\Delta v_Y^b$ durch geeignete Tiefpassfilterung bestimmt.

Die initialen Werte der Hebelarmkomponenten $l_X^v$, $l_Y^v$ und $l_Z^v$ werden auf 0 gesetzt.

$$\frac{1}{g} \cdot \begin{pmatrix} \hat{f}_X^b \\ \hat{f}_Y^b \end{pmatrix} + \frac{1}{g} \cdot \begin{pmatrix} b_X^b \\ b_Y^b \end{pmatrix} - \frac{1}{g} \cdot \begin{pmatrix} (C_{vb})_{1,1} \\ (C_{vb})_{1,2} \end{pmatrix} \cdot \hat{a}_X^v + \frac{1}{g} \cdot \begin{pmatrix} (C_{vb})_{1,2} \cdot (\hat{\omega}_{ib}^b)_Z - (C_{vb})_{1,3} \cdot (\hat{\omega}_{ib}^b)_Y \\ (C_{vb})_{1,3} \cdot (\hat{\omega}_{ib}^b)_X - (C_{vb})_{1,1} \cdot (\hat{\omega}_{ib}^b)_Z \end{pmatrix} \cdot \hat{v}_X^v$$

$$+ \frac{1}{g} \cdot \begin{pmatrix} \begin{pmatrix} -(\hat{\omega}_{ib}^b)_Y^2 - (\hat{\omega}_{ib}^b)_Z^2 \\ (\hat{\omega}_{ib}^b)_X \cdot (\hat{\omega}_{ib}^b)_Y - (\hat{\dot{\omega}}_{ib}^b)_Z \\ (\hat{\omega}_{ib}^b)_X \cdot (\hat{\omega}_{ib}^b)_Z + (\hat{\dot{\omega}}_{ib}^b)_Y \end{pmatrix}^T \\ \begin{pmatrix} (\hat{\omega}_{ib}^b)_X \cdot (\hat{\omega}_{ib}^b)_Y + (\hat{\dot{\omega}}_{ib}^b)_Z \\ -(\hat{\omega}_{ib}^b)_X^2 - (\hat{\omega}_{ib}^b)_Z^2 \\ (\hat{\omega}_{ib}^b)_Y \cdot (\hat{\omega}_{ib}^b)_Z - (\hat{\dot{\omega}}_{ib}^b)_X \end{pmatrix}^T \end{pmatrix} \cdot \underline{C}_{vb}^T \cdot \begin{pmatrix} l_X^v \\ l_Y^v \\ l_Z^v \end{pmatrix} + \begin{pmatrix} (C_{n/\tilde{n}b})_{3,1} \\ (C_{n/\tilde{n}b})_{3,2} \end{pmatrix}$$

$$\equiv \begin{pmatrix} r_X^b & r_Y^b \end{pmatrix}^T$$

$$= \begin{pmatrix} \begin{pmatrix} -(C_{n/\tilde{n}b})_{2,1} & (C_{n/\tilde{n}b})_{1,1} & -\frac{1}{g} & 0 \\ -(C_{n/\tilde{n}b})_{2,2} & (C_{n/\tilde{n}b})_{1,2} & 0 & -\frac{1}{g} \end{pmatrix} & -\frac{1}{g} \begin{pmatrix} \begin{pmatrix} -(\hat{\omega}_{ib}^b)_Y^2 - (\hat{\omega}_{ib}^b)_Z^2 \\ (\hat{\omega}_{ib}^b)_X \cdot (\hat{\omega}_{ib}^b)_Y - (\hat{\dot{\omega}}_{ib}^b)_Z \\ (\hat{\omega}_{ib}^b)_X \cdot (\hat{\omega}_{ib}^b)_Z + (\hat{\dot{\omega}}_{ib}^b)_Y \end{pmatrix}^T \\ \begin{pmatrix} (\hat{\omega}_{ib}^b)_X \cdot (\hat{\omega}_{ib}^b)_Y + (\hat{\dot{\omega}}_{ib}^b)_Z \\ -(\hat{\omega}_{ib}^b)_X^2 - (\hat{\omega}_{ib}^b)_Z^2 \\ (\hat{\omega}_{ib}^b)_Y \cdot (\hat{\omega}_{ib}^b)_Z - (\hat{\dot{\omega}}_{ib}^b)_X \end{pmatrix}^T \end{pmatrix} \cdot \underline{C}_{vb}^T \end{pmatrix} \cdot \begin{pmatrix} \varepsilon_{N/\tilde{N}} \\ \varepsilon_{E/\tilde{E}} \\ \delta b_X^b \\ \delta b_Y^b \\ \delta l_X^v \\ \delta l_Y^v \\ \delta l_Z^v \end{pmatrix}$$

Schätzung des Erd- und Schiffswinkelgeschwindigkeitskomponenten

Stehen die geografische Breite und die Schiffsgeschwindigkeit nicht zur Verfügung wird der Zustandsvektor wiedergegeben durch:

$$\underline{x} = \begin{pmatrix} \varepsilon_{\tilde{N}} & \varepsilon_{\tilde{E}} & \varepsilon_D & \delta d_{\tilde{N}} & \delta d_{\tilde{E}} & \delta d_D & \delta b_X^b & \delta b_Y^b & \delta l_X^v & \delta l_Y^v & \delta l_Z^v \end{pmatrix}^T$$

Die Dynamikmatrix lautet:

5

$$\underline{\underline{F}} = \begin{pmatrix} \begin{pmatrix} 0 & \omega_D & -\omega_{\tilde{E}} & 1 & 0 & 0 \\ -\omega_D & 0 & \omega_{\tilde{N}} & 0 & 1 & 0 \\ \omega_{\tilde{E}} & -\omega_{\tilde{N}} & 0 & 0 & 0 & 1 \\ 0 & 0 & 0 & -\beta_{d^{\tilde{n}}} & 0 & 0 \\ 0 & 0 & 0 & 0 & -\beta_{d^{\tilde{n}}} & 0 \\ 0 & 0 & 0 & 0 & 0 & -\beta_{d^{\tilde{n}}} \end{pmatrix} & \underline{\underline{0}}_{6\times 2} & \underline{\underline{0}}_{6\times 3} \\ \underline{\underline{0}}_{2\times 6} & \mathrm{diag}\begin{pmatrix} -\beta_{b_X^b} \\ -\beta_{b_Y^b} \end{pmatrix} & \underline{\underline{0}}_{2\times 3} \\ \underline{\underline{0}}_{3\times 6} & \underline{\underline{0}}_{3\times 2} & \mathrm{diag}\begin{pmatrix} -\beta_{l_X^v} \\ -\beta_{l_Y^v} \\ -\beta_{l_Z^v} \end{pmatrix} \end{pmatrix}$$

Dabei gilt $\omega_{\tilde{N}} \equiv \Omega \cdot \cos\varphi \cdot \cos\alpha = -d_{\tilde{N}}$, $\omega_{\tilde{E}} \equiv -\Omega \cdot \cos\varphi \cdot \sin\alpha = -d_{\tilde{E}}$ und $\omega_D \equiv -\Omega \cdot \sin\varphi = -d_D$.

Daher ist $\alpha \equiv -\mathrm{atan2}(-d_{\tilde{E}}, -d_{\tilde{N}})$.

Nachdem $\alpha$ signifikant berechnet worden ist, arbeitet der Kompass mit dem tatsächlichen N-E-D-Referenzkoordinatensystem, d.h. der Kompass ist in den Betriebsmodus eingetreten und das Korrekturmodel lautet für den Zustandsvektor:

$$\underline{x} = \begin{pmatrix} \varepsilon_N & \varepsilon_E & \varepsilon_D & \delta d_N & \delta d_C & \delta d_D & \delta b_X^b & \delta b_Y^b & \delta l_X^v & \delta l_Y^v & \delta l_Z^v \end{pmatrix}^T$$

und die Dynamikmatrix:

$$\underline{\underline{F}} = \begin{pmatrix} \begin{pmatrix} 0 & \omega_D & -\omega_E \\ -\omega_D & 0 & \omega_N \\ \omega_E & -\omega_N & 0 \end{pmatrix} & \begin{pmatrix} 1 & \cos\theta_v \cdot \sin\psi_v & 0 \\ 0 & -\cos\theta_v \cdot \cos\psi_v & 0 \\ -\dfrac{d_C \cdot d_D}{d_N^2} \cdot \cos\theta_v \cdot \sin\psi_v & \dfrac{d_D}{d_N} \cdot \cos\theta_v \cdot \sin\psi_v & 1 + \dfrac{d_C}{d_N} \cdot \cos\theta_v \cdot \sin\psi_v \end{pmatrix} & \underline{\underline{0}}_{3\times 2} & \underline{\underline{0}}_{3\times 3} \\ \underline{\underline{0}}_{3\times 3} & \mathrm{diag}\begin{pmatrix} -\beta_{d_N} \\ -\beta_{d_C} \\ -\beta_{d_D} \end{pmatrix} & \underline{\underline{0}}_{3\times 2} & \underline{\underline{0}}_{3\times 3} \\ \underline{\underline{0}}_{2\times 3} & \underline{\underline{0}}_{2\times 3} & \mathrm{diag}\begin{pmatrix} -\beta_{b_X^b} \\ -\beta_{b_Y^b} \end{pmatrix} & \underline{\underline{0}}_{2\times 3} \\ \underline{\underline{0}}_{3\times 3} & \underline{\underline{0}}_{3\times 3} & \underline{\underline{0}}_{3\times 2} & \mathrm{diag}\begin{pmatrix} -\beta_{l_X^v} \\ -\beta_{l_Y^v} \\ -\beta_{l_Z^v} \end{pmatrix} \end{pmatrix}$$

wobei:

$$\omega_N = -d_N - d_C \cdot \cos\theta_v \cdot \sin\psi_v$$

$$\omega_E = d_C \cdot \cos\theta_v \cdot \cos\psi_v$$

$$\omega_D = -d_D - \frac{d_C \cdot d_D}{d_N} \cdot \cos\theta_v \cdot \sin\psi_v$$

$$d_C = -\frac{v_X^v}{R} \cdot$$

und

Winkelgeschwindigkeitssensorabweichungskalibrieriung

Werden die geografische Breite und die Schiffsgeschwindigkeit bereitgestellt, können die Erd- und Schiffswinkelgeschwindigkeitskomponenten berechnet und damit die gemessene Winkelgeschwindigkeit korrigiert sowie deren sensorbedingte Fehler geschätzt bzw. kalibriert werden. Die wesentlich kleineren Abweichungen der Drehratensensoren während des Kompassbetriebs werden korrigiert durch Anwenden des folgenden Zustandsvektors:

$$\underline{x} = \begin{pmatrix} \varepsilon_N & \varepsilon_E & \varepsilon_D & \delta d_X^b & \delta d_Y^b & \delta d_Z^b & \delta b_X^b & \delta b_Y^b & \delta l_X^v & \delta l_Y^v & \delta l_Z^v \end{pmatrix}^T$$

und der nachstehend wiedergegebenen Dynamikmatrix:

$$\underline{\underline{F}} = \begin{pmatrix} \begin{pmatrix} 0 & \omega_D & -\omega_E \\ -\omega_D & 0 & \omega_N \\ \omega_E & -\omega_N & 0 \end{pmatrix} & \underline{\underline{C}}_{nb} & \underline{0}_{3\times2} & \underline{0}_{3\times3} \\ \underline{0}_{3\times3} & \mathrm{diag}\begin{pmatrix} -\beta_{d_X^b} \\ -\beta_{d_Y^b} \\ -\beta_{d_Z^b} \end{pmatrix} & \underline{0}_{3\times2} & \underline{0}_{3\times3} \\ \underline{0}_{2\times3} & \underline{0}_{2\times3} & \mathrm{diag}\begin{pmatrix} -\beta_{b_X^b} \\ -\beta_{b_Y^b} \end{pmatrix} & \underline{0}_{2\times3} \\ \underline{0}_{3\times3} & \underline{0}_{3\times3} & \underline{0}_{3\times2} & \mathrm{diag}\begin{pmatrix} -\beta_{l_X^v} \\ -\beta_{l_Y^v} \\ -\beta_{l_Z^v} \end{pmatrix} \end{pmatrix}$$

Schneller und grober Abgleich

Ist die geografische Breite bekannt, kann aus den geschätzten horizontalen Erdwinkelgeschwindigkeitskomponenten eine schnellere und zuverlässigere Berechnung von α erfolgen.
Der Zustandsvektor lautet:

$$\underline{x} = \begin{pmatrix} \varepsilon_{\widetilde{N}} & \varepsilon_{\widetilde{E}} & \varepsilon_D & \delta d_{\widetilde{N}} & \delta d_{\widetilde{E}} & \delta b_X^b & \delta b_Y^b & \delta l_X^v & \delta l_Y^v & \delta l_Z^v \end{pmatrix}^T$$

Die Dynamikmatrix lautet:

$$
\underline{\underline{F}} = \begin{pmatrix}
\begin{pmatrix}
0 & \omega_D & -\omega_{\widetilde{E}} & 1 & 0 \\
-\omega_D & 0 & \omega_{\widetilde{N}} & 0 & 1 \\
\omega_{\widetilde{E}} & -\omega_{\widetilde{N}} & 0 & 0 & 0 \\
0 & 0 & 0 & -\beta_{d^{\tilde{n}}} & 0 \\
0 & 0 & 0 & 0 & -\beta_{d^{\tilde{n}}}
\end{pmatrix} & \underline{\underline{0}}_{5\times2} & \underline{\underline{0}}_{5\times3} \\[2em]
\underline{\underline{0}}_{2\times5} & \mathrm{diag}\begin{pmatrix} -\beta_{b_X^b} \\ -\beta_{b_Y^b} \end{pmatrix} & \underline{\underline{0}}_{2\times3} \\[2em]
\underline{\underline{0}}_{3\times5} & \underline{\underline{0}}_{3\times2} & \mathrm{diag}\begin{pmatrix} -\beta_{l_X^v} \\ -\beta_{l_Y^v} \\ -\beta_{l_Z^v} \end{pmatrix}
\end{pmatrix}
$$

mit $\omega_{\widetilde{N}} \equiv \Omega\cdot\cos\varphi\cdot\cos\alpha = -d_{\widetilde{N}}$, $\omega_{\widetilde{E}} \equiv -\Omega\cdot\cos\varphi\cdot\sin\alpha = -d_{\widetilde{E}}$ und $\omega_D \equiv -\Omega\cdot\sin\varphi$, so dass $\alpha \equiv$ -atan2($-d_{\widetilde{E}}$, $-d_{\widetilde{N}}$).

Um sicher zu stellen, dass die Kompass-Messeinheit nur für den Strap-Down-Kreiselkompass geeignet ist, sind ihre gemessenen Winkel- und Geschwindigkeitszunahmen auf eine geringere Genauigkeit skaliert als für einen Kreiselkompass brauchbar. Bei Empfang der skalierten Inkremente durch die Kompass-Signalverarbeitungseinheit werden die Inkremente vor ihrer weiteren Verwendung innerhalb der Strap-Down-Kompass-Signalverarbeitungspfade deskaliert und wie oben beschrieben korrigiert.

**Patentansprüche**

1. Verfahren zum Betreiben eines Strap-Down-Schiffskreiselkompasses zur optimalen Lage- und Kurswinkelberechnung auf einem Schiff mit drei zueinander jeweils im rechten Winkel ausgerichteten Drehratensensoren und zwei nominal horizontal ausgerichteten orthogonalen Beschleunigungssensoren ohne zwingende Vorgabe der geografischen Breite und/oder der Geschwindigkeit des Schiffs,
mit den Schritten:

   a. Erstellen einer Bank von Dynamikgleichungen aufgrund der von den Drehratensensoren erfassten Winkelgeschwindigkeitskomponenten,
   b. Erstellen einer Messdatengleichung aufgrund der von den Beschleunigungssensoren erfassten Kraftkomponenten,
   c. Ermitteln der Eigenschaften des Hebelarms zwischen dem Strap-Down-Schiffskreiselkompass und dem Drehpunkt des Schiffs und
   d. Ermitteln der Eigenschaften der Erdrotation sowie der Schiffswinkelgeschwindigkeit,

   wobei deren Eigenschaften auf der Grundlage der Bank von Dynamikgleichungen und der Messdatengleichung ermittelt und jeweils als Parameter zur Berechnung der geografischen Breite und/oder Geschwindigkeit des Schiffs verwendet werden.

2. Verfahren nach Anspruch 1, **dadurch gekennzeichnet, dass** die Dynamikgleichung

$$
\underline{\underline{\overset{\&}{C}}}_{nb} = \underline{\underline{C}}_{nb} \cdot \underline{\underline{\Omega}}_{nb}^b = \underline{\underline{C}}_{nb} \cdot \left( \underline{\underline{\Omega}}_{ib}^b + \delta\underline{\underline{\Omega}}_{ib}^b \right) - \left( \underline{\underline{\Omega}}_{en}^n + \underline{\underline{\Omega}}_{ie}^n \right) \cdot \underline{\underline{C}}_{nb}
$$

   lautet.

3. Verfahren nach einem der vorhergehenden Ansprüche, **dadurch gekennzeichnet, dass** die Messdatengleichung

$$\underline{f}^b + \delta\underline{f}^b = \underline{\overset{\phi}{\dot{x}}} - \underline{\underline{C}}^T_{nb} \cdot \underline{g}^n$$

lautet, mit

$$\underline{\underline{C}}_{nb}(\phi,\theta,\psi) = \underline{\underline{R}}_3(-\psi) \cdot \underline{\underline{R}}_2(-\theta) \cdot \underline{\underline{R}}_1(-\phi)$$

$$= \begin{pmatrix} c\theta \cdot c\psi & s\phi \cdot s\theta \cdot c\psi - c\phi \cdot s\psi & c\phi \cdot s\theta \cdot c\psi + s\phi \cdot s\psi \\ c\theta \cdot s\psi & s\phi \cdot s\theta \cdot s\psi + c\phi \cdot c\psi & c\phi \cdot s\theta \cdot s\psi - s\phi \cdot c\psi \\ -s\theta & s\phi \cdot c\theta & c\phi \cdot c\theta \end{pmatrix}$$

wobei

- $\underline{C}_{nb}$ der Transformationsmatrix mit dem Roll-, Nick- und Kurswinkel des Kompass,
- $\underline{\underline{\Omega}}^b_{ib}$ den von den drei Drehratensensoren gemessenen Winkelgeschwindigkeitskomponenten,
- $\underline{\underline{\Omega}}^n_{ie}$ den Erddrehratenkomponenten im Nord-Ost-Unten-Bezugssystem als Funktionen der geografischen Breite,
- $\underline{\underline{\Omega}}^n_{en}$ den Schiffswinkelgeschwindigkeitskomponenten im Nord-Ost-Unten-Bezugssystem als Funktionen des Kompassgeschwindigkeitsvektors auf der gekrümmten Erdoberfläche,
- $\delta\underline{\underline{\Omega}}^b_{ib}$, $\delta\underline{f}^b$ den Fehlerkorrekturen der Drehratensensoren und Beschleunigungssensoren,
- $\underline{f}^b$ den von den nominal horizontal und orthogonal angeordneten Beschleunigungssensoren gemessenen Kraftkomponenten und
- $\underline{g}^n$ der Erdschwere mit $\underline{g}^n = (0\ 0\ g)^T$

entspricht.

4. Verfahren nach einem der vorhergehenden Ansprüche, **dadurch gekennzeichnet, dass** die Fehlerkorrekturen der Beschleunigungssensoren und gegebenenfalls Drehratensensoren mittels eines Optimalfilters auf der Grundlage einer erweiterten Zustandsraumdarstellung ermittelt werden.

**FIG. 1**

Europäisches
Patentamt

European
Patent Office

Office européen
des brevets

# EUROPÄISCHER RECHERCHENBERICHT

**Nummer der Anmeldung**

EP 18 17 8330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | XIXIANG LIU ET AL: "A novel self-alignment method for SINS based on three vectors of gravitational apparent motion in inertial frame", MEASUREMENT., Bd. 62, 1. Februar 2015 (2015-02-01), Seiten 47-62, XP055517898, GB ISSN: 0263-2241, DOI: 10.1016/j.measurement.2014.11.010 * das ganze Dokument * | 1-4 | INV. G01C21/16 G01C25/00 |
| A | CN 106 123 917 A (HARBIN INSTITUTE TECHNOLOGY) 16. November 2016 (2016-11-16) * das ganze Dokument * | 1 | |
| A | QIAN LI ET AL: "A novel algorithm for marine strapdown gyrocompass based on digital filter", MEASUREMENT., Bd. 46, Nr. 1, 13. September 2012 (2012-09-13), Seiten 563-571, XP55517861, GB ISSN: 0263-2241, DOI: 10.1016/j.measurement.2012.08.015 * das ganze Dokument * | 1 | RECHERCHIERTE SACHGEBIETE (IPC) G01C |
| A | YITING LIU ET AL: "A Self-Alignment Algorithm for SINS Based on Gravitational Apparent Motion and Sensor Data Denoising", SENSORS, Bd. 15, Nr. 5, 27. April 2015 (2015-04-27), Seiten 9827-9853, XP55517904, DOI: 10.3390/s150509827 * das ganze Dokument * | 1 | |

-/--

Der vorliegende Recherchenbericht wurde für alle Patentansprüche erstellt

| Recherchenort | Abschlußdatum der Recherche | Prüfer |
|---|---|---|
| Den Haag | 23. Oktober 2018 | Tabellion, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 ................................................................

& : Mitglied der gleichen Patentfamilie, übereinstimmendes Dokument

EPO FORM 1503 03.82 (P04C03)

**Europäisches Patentamt**

**European Patent Office**

**Office européen des brevets**

# EUROPÄISCHER RECHERCHENBERICHT

Nummer der Anmeldung

EP 18 17 8330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BO XU ET AL: "Error Analysis and Compensation of Gyrocompass Alignment for SINS on Moving Base", MATHEMATICAL PROBLEMS IN ENGINEERING, Bd. 2014, 1. Januar 2014 (2014-01-01), Seiten 1-18, XP55517607, CH ISSN: 1024-123X, DOI: 10.1155/2014/373575 * das ganze Dokument * ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 23. Oktober 2018 | Tabellion, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 8330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2018

| Im Recherchenbericht angeführtes Patentdokument | Datum der Veröffentlichung | Mitglied(er) der Patentfamilie | Datum der Veröffentlichung |
|---|---|---|---|
| CN 106123917 A | 16-11-2016 | KEINE | |

Für nähere Einzelheiten zu diesem Anhang : siehe Amtsblatt des Europäischen Patentamts, Nr.12/82